# DEMANDE DE BREVET EUROPEEN

(11) **EP 4 843 852 A1**
(43) Date de publication de la demande: **25.11.2026**
(21) Numéro de dépôt: 26173241.6
(22) Date de dépôt: 20.04.2026
(51) Int. Cl.: B60W 30/14, B60W 30/16, B60W 50/00

(54) **PROCÉDÉ DE DÉTERMINATION D'UNE VITESSE LIMITE CONTEXTUALISÉE POUR PILOTER EN TEMPS RÉEL UN SYSTÈME PRÉDICTIF ACC D'UN VÉHICULE AUTOMOBILE**

(30) Priorité: 20.05.2025 FR 2505374
(71) Demandeur: Stellantis Auto SAS, 78300 Poissy (FR)
(72) Inventeur: ABOULISSANE, BADREDDINE, 20270 SIDI MAAROUF (MA); BOUHAL, AYOUB, 20270 SIDI MAAROUF (MA)
(74) Mandataire: ESIP

(57) **Abrégé**

Procédé de détermination d'une vitesse limite contextualisée pour piloter en temps réel un système prédictif ACC d'un véhicule automobile.

L'invention concerne un procédé de détermination d'une vitesse limite contextualisée pour piloter un système prédictif ACC d'un véhicule, mis en œuvre par un ensemble comprenant une caméra frontale, un système de navigation, un dispositif de services connectés intégrant un système SLI. Selon l'invention, le procédé exécute les étapes suivantes :
- acquérir (étape E10) en temps réel une vitesse limite initiale détectée par ladite au moins une caméra frontale, par ledit système de navigation, par ledit dispositif de services connectés,
- calculer (étape E20) une vitesse limite contextualisée en appliquant (étapes E21, E22, E23) les paramètres de correction suivants : un coefficient de largeur, relatif à la largeur de la route, un coefficient croisant une valeur FRC avec une valeur FOW, un paramètre d'ajustement fonction de la présence d'un obstacle.

## Description

### [Domaine technique]

L'invention a trait au domaine des véhicules automobiles, en particulier au domaine des systèmes avancés d'assistance à la conduite et de la sécurité automobile.

L'invention concerne plus précisément un procédé de détermination d'une vitesse limite contextualisée capable de piloter en temps réel un système prédictif ACC d'un véhicule automobile.

L'invention concerne aussi un véhicule automobile mettant en œuvre le procédé de l'invention.

### [Etat de la technique antérieure]

Un véhicule automobile peut comporter des systèmes avancés d'aide à la conduite, désignés par l'acronyme anglais « ADAS » pour « Advanced Driver Assistance System » et utilisés dans le but d'améliorer la sécurité du véhicule.

Parmi les systèmes ADAS, on connaît notamment un système régulateur de vitesse prédictif « ACC » (acronyme de « Adaptative Cruise Control » en anglais pour « régulateur de vitesse adaptative »), encore appelé « système prédictif ACC ».

Le système prédictif ACC utilise plusieurs sources d'informations pour déterminer et proposer à l'utilisateur une vitesse du véhicule en fonction de paramètres réels de circulation du véhicule.

Dans une réalisation connue, le système prédictif ACC croise des données issues :
- de caméras du véhicule, notamment d'une caméra frontale agencée à l'avant du véhicule,
- d'un système de navigation, comportant une cartographie numérique embarquée et/ou connectée,
- d'un dispositif de services connectés, intégrant notamment un système « SLI » (acronyme anglais de « Speed Limit Information » pour « informations sur la limitation de vitesse »).

Dans un système prédictif ACC, la vitesse cible proposée par le système ACC est influencée par des limitations détectées par les caméras du véhicule, par des limitations issues du système de navigation intégrant la cartographie numérique embarquée et/ou connectée, par des limitations issues des services connectés.

Des incohérences peuvent ainsi survenir lorsque ces sources sont discordantes ou imprécises.

Par exemple, un positionnement du véhicule mal associé au segment routier actif, notamment en présence d'un échangeur complexe, peut conduire à placer le véhicule sur un mauvais tronçon et donc proposer une vitesse limite distincte inférieure ou supérieure à la vitesse réelle autorisée.

Dans un autre exemple, le système de navigation peut comporter des données obsolètes ou imprécises, conduisant ainsi à proposer une vitesse limite distincte supérieure ou inférieure à la nouvelle limitation de vitesse instaurée (par exemple consécutivement à la présence de travaux).

De telles incohérences entraînent une variation anormale de la vitesse cible, pouvant conduire à un non-respect de la limitation légale.

Afin d'éviter de tels conflits d'interprétation, le conducteur peut être tenté de désactiver le système prédictif ACC par mesure de sécurité, ce qui entraîne une perte de confort pour le conducteur.

### [Exposé de l'invention]

La présente invention vise à surmonter les inconvénients précités, et concerne pour ce faire un procédé de détermination d'une vitesse limite contextualisée pour piloter en temps réel un système prédictif ACC d'un véhicule automobile, mis en œuvre par un ensemble de détermination d'une vitesse limite contextualisée comprenant :
- au moins une caméra frontale adaptée pour lire des panneaux de signalisation et pour détecter des marquages au sol,
- un système de navigation, comportant une cartographie numérique embarquée et/ou connectée intégrant une base de données comprenant une représentation numérique de la route et de son environnement,
- un dispositif de services connectés intégrant un système SLI adapté pour informer en temps réel ledit système prédictif ACC des limitations de vitesse en vigueur sur une portion de route considérée,
ledit procédé étant remarquable en ce que ledit ensemble de détermination d'une vitesse limite contextualisée comprend en outre des moyens matériels et logiciels mettant en œuvre les étapes suivantes visant à :
acquérir en temps réel pour une portion de route considérée une vitesse limite initiale détectée par ladite au moins une caméra frontale, par ledit système de navigation, par ledit dispositif de services connectés,
calculer une vitesse limite contextualisée en appliquant à ladite vitesse limite initiale les paramètres de correction suivants :
   - un coefficient de largeur, relatif à la largeur de la route sur laquelle circule ledit véhicule,
   - un coefficient croisant une valeur FRC représentative d'une classe fonctionnelle de la route avec une valeur FOW représentative du type de voie physique,
   - un paramètre d'ajustement, fonction de la présence d'un obstacle environnant.

Ainsi, en prévoyant de détecter une vitesse initiale par au moins une caméra frontale, par un système de navigation et par un dispositif de services connectés et d'appliquer à cette vitesse initiale détectée des paramètres de correction qui dépendent de la situation réelle, on ajuste dynamiquement la vitesse initiale à l'aide de paramètres réels fonction du trafic et des conditions de la route.

De la sorte, on corrige les détection erronées pouvant résulter des détections faites par la ou les caméra(s) frontale(s), par le système de navigation et par le dispositif de services connectés, ce qui permet de piloter le système prédictif ACC de façon plus fidèle et d'éviter les conflits d'interprétation.

Grâce à la présente invention, on robustifie le système prédictif ACC par rapport aux systèmes de l'art antérieur.

Selon des caractéristiques optionnelles du procédé selon l'invention :
- ladite étape de calcul de ladite vitesse limite contextualisée est déclenchée lorsque ladite vitesse limite initiale détectée par ladite au moins une caméra frontale est différente de celle détectée par ledit système de navigation et de celle détectée par ledit dispositif de services connectés ;
- lorsqu'au moins deux desdites vitesses limites initiales sont identiques, lesdites vitesses limites initiales étant comprises dans le groupe comprenant la vitesse limite initiale détectée par ladite au moins une caméra frontale, la vitesse limite initiale détectée par ledit système de navigation, la vitesse limite initiale détectée par ledit dispositif de services connectés, le procédé comporte une étape supplémentaire visant à piloter ledit système prédictif ACC sur la base de ladite vitesse limite initiale détectée ;
- dans une réalisation, le procédé comporte une étape supplémentaire visant à déterminer si la valeur absolue de la différence entre ladite vitesse limite contextualisée calculée et une vitesse réelle dudit véhicule est inférieure à une valeur de vitesse prédéterminée, et piloter ledit système prédictif ACC sur la base de ladite vitesse réelle du véhicule lorsque ladite valeur absolue est inférieure à ladite valeur de vitesse prédéterminée ;
- ladite valeur de vitesse prédéterminée peut être égale à une vitesse comprise entre 10km/h et 20km/h ;
   - dans une réalisation, le procédé comporte une étape visant à déterminer, lorsque ladite valeur absolue est supérieure à ladite valeur prédéterminée, si la vitesse limite contextualisée calculée est stable sur une durée supérieure ou égale à une durée de confiance prédéterminée, et piloter ledit système prédictif ACC sur la base de ladite vitesse limite contextualisée lorsque ladite vitesse limite contextualisée calculée est stable sur ladite durée de confiance ;
   - le procédé comporte une étape visant à piloter ledit système prédictif ACC sur la base de ladite vitesse réelle du véhicule lorsque ladite vitesse limite contextualisée calculée n'est pas stable sur ladite durée de confiance ;
   - ladite durée de confiance peut être égale à une valeur comprise entre 1s et 3s ;
   - ladite valeur FRC représentative d'une classe fonctionnelle de la route et ladite valeur FOW représentative du type de voie physique sont données par ledit système de navigation.

L'invention concerne également un véhicule automobile comprenant un système prédictif ACC et un ensemble de détermination d'une vitesse limite contextualisée pour piloter en temps réel ledit système prédictif ACC, comprenant :
- au moins une caméra frontale adaptée pour lire des panneaux de signalisation et pour détecter des marquages au sol,
- un système de navigation, comportant une cartographie numérique embarquée et/ou connectée intégrant une base de données comprenant une représentation numérique de la route et de son environnement,
- un dispositif de services connectés intégrant un système SLI adapté pour informer en temps réel ledit système prédictif ACC des limitations de vitesse en vigueur sur une portion de route considérée,
ledit véhicule étant remarquable en ce que ledit ensemble de détermination d'une vitesse limite contextualisée comprend des moyens matériels et logiciels mettant en œuvre ledit procédé selon l'invention.

### [Description des dessins]

D'autres caractéristiques, buts et avantages de l'invention apparaîtront à la lecture de la description détaillée qui suit pour la compréhension de laquelle on se reportera aux dessins annexés dans lesquels :
[Fig. 1] montre les étapes du procédé selon l'invention.
[Fig. 2] montre un exemple de matrice de correspondance utilisée dans le cadre de l'invention.
[Fig. 3] montre une variante de réalisation du procédé de l'invention.

### [Description des modes de réalisation]

Dans la suite de la description, des éléments présentant une structure identique ou des fonctions analogues sont désignés par une même référence.

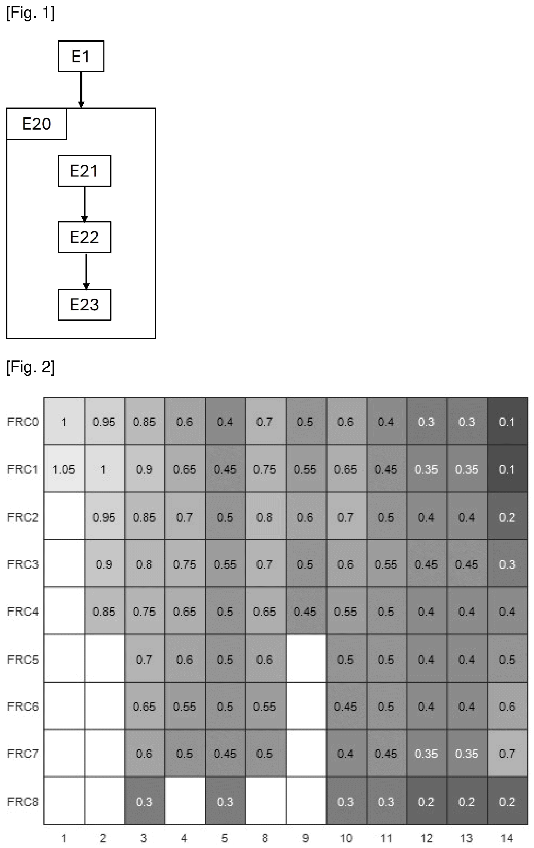

On se réfère à la figure 1 montrant les étapes du procédé selon l'invention.

Le procédé de l'invention concerne un procédé de détermination d'une vitesse limite contextualisée pour piloter en temps réel un système prédictif ACC d'un véhicule automobile.

Le véhicule selon l'invention comprend à cet effet un système prédictif ACC et un ensemble de détermination d'une vitesse contextualisée comprenant notamment un calculateur central, désigné par l'acronyme « VSM » pour « vehicle supervision module », au moins une caméra frontale, un système de navigation, un dispositif de services connectés intégrant notamment un système « SLI ».

La caméra frontale est agencée à l'avant du véhicule et est adaptée pour lire les panneaux de signalisation et pour détecter des marquages au sol.

Le système de navigation comporte une cartographie numérique embarquée et/ou connectée intégrant une base de données qui comprend une représentation numérique de la route et de son environnement, conçu pour anticiper ce qui va se présenter devant le véhicule avant de le percevoir physiquement via les capteurs.

La base de données peut par exemple être issue du service de cartographie numérique eHorizon^{®}, HERE^{®}, TomTom^{®}, etc.

La base de données du système de navigation intègre notamment des données relatives à la limitation de vitesse officielle (selon le type de voie), à la topographie (pentes, dénivelés, courbures), aux types et catégories de voies (autoroute, route nationale, route départementale, etc.), aux intersections et échangeurs, etc.

Le dispositif de services connectés intègre notamment un système « SLI » (acronyme anglais de « Speed Limit Information » pour « informations sur la limitation de vitesse »), qui est un service connecté qui informe en temps réel le système prédictif ACC des limitations de vitesse en vigueur sur la portion de route parcourue et qui fonctionne en combinant la lecture des panneaux de signalisation visualisés par la caméra frontale, les données cartographiques du système de navigation et les mises à jour en ligne pour intégrer des limitations temporaires (travaux, restrictions météo, événements exceptionnels, etc.).

Le système prédictif ACC est adapté pour croiser les données issues des caméras, du système de navigation et du dispositif de services connectés.

L'ensemble de détermination d'une vitesse limite contextualisée comprend en outre des moyens matériels et logiciels, par exemple embarqués dans le véhicule, mettant en œuvre le procédé de détermination d'une vitesse limite contextualisée selon l'invention.

Selon l'invention, le procédé comporte une première étape E10 visant à acquérir en temps réel pour une portion de route considérée une vitesse limite initiale détectée à la fois par la ou les caméra(s) frontale(s), par le système de navigation et par le dispositif de services connectés. Il s'agit de la vitesse basée sur la vitesse légale ou de la vitesse de consigne choisie par le conducteur. Cette vitesse peut être ajustée en fonction des préférences du conducteur.

Une fois ces vitesses limites initiales détectées, le procédé exécute une étape E20 consécutive visant à calculer une vitesse limite dite « contextualisée » prenant en considération de façon dynamique la vitesse en fonction de l'état de la route, du trafic, etc.

Pour ce faire, le calcul de la vitesse limite contextualisée exécute les sous-étapes E21 à E23 visant à appliquer des paramètres de correction à la vitesse limite initiale détectée.

Dans le cadre de l'invention, l'étape E21 prévoit l'application d'un coefficient de largeur, relatif à la largeur de la route sur laquelle circule le véhicule.

Le coefficient de largeur est basé sur la largeur de la voie. Plus la voie est étroite, plus le coefficient de largeur est faible afin de réduire lors de son application la valeur de la vitesse limite initiale détectée.

Le coefficient de largeur est inférieur ou égal à 1. Dans un exemple de réalisation de l'invention non limitatif :
- lorsque la largeur de la voie est supérieure ou égale à environ 3,5m, le coefficient de largeur est égal à 1,
- lorsque la largeur de la voie est supérieure ou égale à 3m et inférieure à 3,5m, le coefficient de largeur est égal à 0,9,
- lorsque la largeur de la voie est inférieure à 3m, le coefficient de largeur est égal à 0,8.

Les valeurs de largeur de voie et des coefficients de largeur sont données à titre d'exemple uniquement, et peuvent être adaptées pour les besoins de l'invention.

Dans le cadre de l'invention, l'étape E22 prévoit l'application d'un coefficient croisant une valeur de classe de route fonctionnelle avec une valeur représentative du type de voie physique.

La valeur de classe de route fonctionnelle, désignée par l'acronyme « FRC » pour « Functional Road Class » en anglais, indique l'importance hiérarchique de la voie (autoroute, route nationale, route départementale, etc.) et aide à prioriser les trajets et décisions.

La valeur de classe de route fonctionnelle est par exemple donnée par le tableau ci-dessous.

**[Table 1]**

| FRC | Description |
|---|---|
| 0 | Autoroute |
| 1 | Route principale de grande importance |
| 2 | Other major road |
| 3 | Route secondaire |
| 4 | Route de liaison locale |
| 5 | Route locale de grande importance |
| 6 | Route locale |
| 7 | Route locale d'importance mineure |
| 8 | Autre route |

Le type de voie physique, désigné par l'acronyme « FOW » pour « Form Of Way » en anglais, indique la configuration de la route : route à voies multiples, voie unique, rond-point, bretelles d'accès, etc.

La valeur de type de voie est par exemple donnée par le tableau ci-dessous.

**[Table 2]**

| Valeur | Description |
|---|---|
| 0 | Inconnu |
| 1 | Autoroute ou route à accès contrôle qui n'est pas une bretelle d'accès ou une rampe d'accès |
| 2 | Route à voies multiples |
| 3 | Voie unique |
| 4 | Rond-point |
| 5 | Carrefour |
| 6 | Réservé |
| 7 | Réservé |
| 8 | Route parallèle (type particulier de bretelle d'accès) |
| 9 | Bretelle d'accès à une autoroute ou à une route à accès contrôlé |
| 10 | Bretelle d'accès (en dehors d'une autoroute ou d'une route à accès contrôlé) |
| 11 | Route de desserte |
| 12 | Entrée ou sortie d'un parking |
| 13 | Entrée ou sortie de service |
| 14 | Zone piétonne |
| 15 | Sans objet |

La valeur « FRC » et la valeur « FOW » sontdonnées par le système de navigation du véhicule et peuvent être paramétrées. En particulier, les données FRC et FOW sont fournies par la cartographie numérique embarquée et/ou connectée via la géolocalisation du véhicule.

Le coefficient croisant la valeur de classe de route fonctionnelle avec la valeur représentative du type de voie est obtenu par une ou plusieurs matrices de correspondance paramétrables en fonction de paramètres d'entrée, en particulier en fonction de la vitesse réelle du véhicule.

Un exemple de matrice de correspondance est représenté à la figure 2 à laquelle on se réfère en complément de la référence faite à la figure 1.

La matrice de correspondance donne des valeurs du coefficient en fonction de la valeur d'entrée de classe de route fonctionnelle (ordonnée) et de la valeur d'entrée représentative du type de voie (abscisse).

Par exemple, lorsque la classe de route fonctionnelle est une autoroute, le FRC est égal à 0 et lorsque le type de voie est une autoroute ou route à accès contrôlé qui n'est pas une bretelle d'accès ou une rampe d'accès, le FOW est égal à 1. Dans l'exemple de matrice de correspondance donné à la figure 2, le coefficient retenu est égal à 1. Les valeurs des coefficients données par la matrice de correspondance sont toutefois paramétrables en fonction de paramètres d'entrée qui dépendent par exemple de la vitesse réelle du véhicule. Ainsi, plusieurs matrices peuvent être utilisées selon que le véhicule circule à haute vitesse ou à basse vitesse.

Une fois que le coefficient croisant la valeur de classe de route fonctionnelle avec la valeur représentative du type de voie a été appliqué à la vitesse limite initiale détectée, le précédé exécute l'étape E23 visant à appliquer un paramètre d'ajustement, fonction de la présence d'un obstacle environnant et qui permet d'ajuster la vitesse en fonction d'obstacles environnants.

Dans un exemple de réalisation de l'invention, si la vitesse de l'objet environnant détecté roule à une vitesse identique à celle du véhicule, le paramètre d'ajustement peut tendre vers 1 alors que si la vitesse de l'objet environnant détecté roule plus lentement que le véhicule, le paramètre d'ajustement peut tendre vers 0.

Dans une réalisation, un paramètre de sécurité peut être pris en compte dans le calcul du paramètre d'ajustement, de sorte que plus le paramètre de sécurité est faible, moins le système prêtera attention à l'objet.

L'équation suivante peut être retenue pour le calcul du paramètre d'ajustement : [Math 1] ${Par}_{ajustement} = 1 - \frac{{V}_{obstacle}}{{V}_{v é hicule}} ∗ {Par}_{s é curit é}$ où :
*Parₐⱼᵤₛₜₑₘₑₙₜ* désigne le paramètre d'ajustement,
*V_{obstacle}* désigne la vitesse de l'obstacle,
*V_{véhicule}* désigne la vitesse du véhicule,
*Par_{sécurité}* désigne le paramètre de sécurité.

Ainsi, si un obstacle circule à 60km/h et que la vitesse du véhicule est égale à celle de l'obstacle et que le paramètre de sécurité est égal à 0,3, le paramètre d'ajustement sera égal à 0,7, ce qui signifie que la vitesse limite contextualisée par le paramètre d'ajustement sera égale à 42km/h.

L'équation ainsi définie pour calculer la vitesse limite contextualisée *V_{contexte}* à partir de la vitesse limite initiale *Vᵢₙᵢₜᵢₐₗₑ* peut être établie comme suit : [Math 2] ${V}_{contexte} = {V}_{initiale} ∗ \left[{Coeff}_{largeur}∗Coeff\left(FRC, FOW\right)∗{Par}_{ajustement}\right]$ où :
*V_{contexte}* désigne la vitesse limite contextualisée,
*Vᵢₙᵢₜᵢₐₗₑ* désigne la vitesse limite initiale détectée,
*Coeff_{largeur}* désigne le coefficient de largeur de voie,
*Coeff* (*FRC, FOW*) désigne le coefficient obtenu en fonction de la valeur d'entrée de classe de route fonctionnelle (FRC) et de la valeur d'entrée représentative du type de voie (FOW), *Parₐⱼᵤₛₜₑₘₑₙₜ* désigne le paramètre d'ajustement.

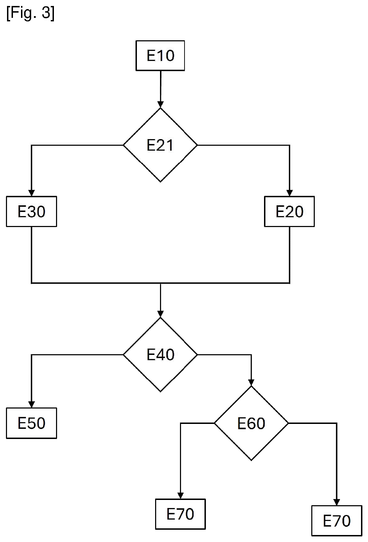

On se réfère à la figure 3 montrant une variante de réalisation du procédé de l'invention.

Dans une réalisation de l'invention, l'étape E20 visant à calculer la vitesse limite contextualisée peut être déclenchée lorsque la vitesse limite initiale détectée par la ou les caméra(s) frontale(s) est différente de celle détectée par le système de navigation et de celle détectée par ledit dispositif de services connectés.

Autrement, dit, l'étape E20 visant à calculer la vitesse limite contextualisée peut être déclenchée lorsque les vitesses limites initiales déterminées par les trois sources sont différentes.

Ainsi, lorsqu'au moins deux des vitesses limites initiales détectées par les trois sources sont identiques, le procédé peut mettre en œuvre une étape supplémentaire E30 visant à piloter le système prédictif ACC sur la base de la vitesse limite initiale détectée par les au moins deux sources identiques.

Dans l'exemple de réalisation illustré à la figure 3, le procédé prévoit de mettre en œuvre une étape supplémentaire E40 postérieure à l'étape E20 de calcul de la vitesse limite contextualisée ou, le cas échéant, postérieure à l'étape E30 visant à piloter le système prédictif ACC sur la base de la vitesse limite initiale détectée par les au moins deux sources identiques.

L'étape E40 vise à déterminer si la valeur absolue de la différence entre la vitesse limite contextualisée calculée au cours de l'étape E20 et une vitesse réelle du véhicule est inférieure à une valeur de vitesse prédéterminée. Par exemple, la valeur de vitesse prédéterminée peut être égale à une vitesse comprise entre 10km/h environ et 20km/h environ.

Dans l'affirmative, c'est-à-dire dans le cas où la valeur absolue de la différence entre la vitesse limite contextualisée calculée au cours de l'étape E20 et la vitesse réelle du véhicule est inférieure à la valeur de vitesse prédéterminée, le procédé se poursuit par la mise en œuvre d'une étape E50 visant à piloter le système prédictif ACC sur la base de la vitesse réelle du véhicule.

Dans la négative, c'est-à-dire dans le cas où la valeur absolue de la différence entre la vitesse limite contextualisée calculée au cours de l'étape E20 et la vitesse réelle du véhicule est supérieure à la valeur de vitesse prédéterminée, le procédé peut exécuter une étape E60 visant à déterminer si la vitesse limite contextualisée calculée lors de l'étape E20 est stable sur une durée supérieure ou égale à une durée de confiance prédéterminée. Par exemple, la durée de confiance peut être égale à une valeur comprise entre 1s environ et 3s environ.

Dans le cas où la vitesse limite contextualisée calculée lors de l'étape E20 est stable sur la durée de confiance, le procédé peut comporter une étape E70 selon laquelle le système prédictif ACC est piloté sur la base de la vitesse limite contextualisée E20.

En revanche, dans le cas où l'étape E60 révèle que la vitesse limite contextualisée calculée lors de l'étape E20 n'est pas stable sur la durée de confiance, le procédé peut comporter une étape E80 visant à piloter le système prédictif ACC sur la base de la vitesse réelle du véhicule.

Comme il va de soi, la présente invention ne se limite pas aux seules formes de réalisation de ce procédé et de ce véhicule pour la mise en œuvre de ce procédé, décrites ci-dessus uniquement à titre d'exemples illustratifs, mais elle embrasse au contraire toutes les variantes faisant intervenir les équivalents techniques des moyens décrits ainsi que leurs combinaisons si celles-ci entrent dans le cadre de l'invention.

## Revendications

1. Procédé de détermination d'une vitesse limite contextualisée pour piloter en temps réel un système prédictif ACC d'un véhicule automobile, mis en œuvre par un ensemble de détermination d'une vitesse limite contextualisée comprenant :
- au moins une caméra frontale adaptée pour lire des panneaux de signalisation et pour détecter des marquages au sol,
- un système de navigation, comportant une cartographie numérique embarquée et/ou connectée intégrant une base de données comprenant une représentation numérique de la route et de son environnement,
- un dispositif de services connectés intégrant un système SLI adapté pour informer en temps réel ledit système prédictif ACC des limitations de vitesse en vigueur sur une portion de route considérée,
ledit procédé étant **caractérisé en ce que** ledit ensemble de détermination d'une vitesse limite contextualisée comprend en outre des moyens matériels et logiciels mettant en œuvre les étapes suivantes visant à :
- acquérir (étape E10) en temps réel pour une portion de route considérée une vitesse limite initiale détectée :
• par ladite au moins une caméra frontale,
• par ledit système de navigation,
• par ledit dispositif de services connectés,
- calculer (étape E20) une vitesse limite contextualisée en appliquant (étapes E21, E22, E23) à ladite vitesse limite initiale les paramètres de correction suivants :
• un coefficient de largeur, relatif à la largeur de la route sur laquelle circule ledit véhicule,
• un coefficient croisant une valeur FRC représentative d'une classe fonctionnelle de la route avec une valeur FOW représentative du type de voie physique,
• un paramètre d'ajustement, fonction de la présence d'un obstacle environnant.

2. Procédé selon la revendication 1, **caractérisé en ce que** ladite étape (E20) de calcul de ladite vitesse limite contextualisée est déclenchée lorsque ladite vitesse limite initiale détectée par ladite au moins une caméra frontale est différente de celle détectée par ledit système de navigation et de celle détectée par ledit dispositif de services connectés.

3. Procédé selon l'une des revendications 1 ou 2, **caractérisé en ce que** lorsqu'au moins deux desdites vitesses limites initiales sont identiques, lesdites vitesses limites initiales étant comprises dans le groupe comprenant :
- la vitesse limite initiale détectée par ladite au moins une caméra frontale,
- la vitesse limite initiale détectée par ledit système de navigation,
- la vitesse limite initiale détectée par ledit dispositif de services connectés,
le procédé comporte une étape supplémentaire visant à piloter (étape E30) ledit système prédictif ACC sur la base de ladite vitesse limite initiale détectée.

4. Procédé selon l'une quelconque des revendications 1 à 3, **caractérisé en ce qu'**il comporte une étape supplémentaire visant à :
- déterminer (étape E40) si la valeur absolue de la différence entre ladite vitesse limite contextualisée calculée et une vitesse réelle dudit véhicule est inférieure à une valeur de vitesse prédéterminée,
- piloter (étape E50) ledit système prédictif ACC sur la base de ladite vitesse réelle du véhicule lorsque ladite valeur absolue est inférieure à ladite valeur de vitesse prédéterminée.

5. Procédé selon la revendication 4, **caractérisé en ce que** ladite valeur de vitesse prédéterminée est égale à une vitesse comprise entre 10km/h et 20km/h.

6. Procédé selon l'une des revendications 4 ou 5, **caractérisé en ce qu'**il comporte une étape visant à :
- déterminer (étape E60), lorsque ladite valeur absolue est supérieure à ladite valeur prédéterminée, si la vitesse limite contextualisée calculée est stable sur une durée supérieure ou égale à une durée de confiance prédéterminée,
- piloter (étape E70) ledit système prédictif ACC sur la base de ladite vitesse limite contextualisée lorsque ladite vitesse limite contextualisée calculée est stable sur ladite durée de confiance.

7. Procédé selon la revendication 6, **caractérisé en ce qu'**il comporte une étape (E80) visant à piloter ledit système prédictif ACC sur la base de ladite vitesse réelle du véhicule lorsque ladite vitesse limite contextualisée calculée n'est pas stable sur ladite durée de confiance.

8. Procédé selon l'une des revendications 6 ou 7, **caractérisé en ce que** ladite durée de confiance est égale à une valeur comprise entre 1s et 3s.

9. Procédé selon l'une quelconque des revendications 1 à 8, **caractérisé en ce que** ladite valeur FRC représentative d'une classe fonctionnelle de la route et ladite valeur FOW représentative du type de voie physique sont données par ledit système de navigation.

10. Véhicule automobile comprenant un système prédictif ACC et un ensemble de détermination d'une vitesse limite contextualisée pour piloter en temps réel ledit système prédictif ACC, comprenant :
- au moins une caméra frontale adaptée pour lire des panneaux de signalisation et pour détecter des marquages au sol,
- un système de navigation, comportant une cartographie numérique embarquée et/ou connectée intégrant une base de données comprenant une représentation numérique de la route et de son environnement,
- un dispositif de services connectés intégrant un système SLI adapté pour informer en temps réel ledit système prédictif ACC des limitations de vitesse en vigueur sur une portion de route considérée,
ledit véhicule étant **caractérisé en ce que** ledit ensemble de détermination d'une vitesse limite contextualisée comprend des moyens matériels et logiciels mettant en œuvre ledit procédé selon l'une quelconque des revendications 1 à 9.
